# EUROPEAN PATENT SPECIFICATION

(11) **EP 4 026 420 B1**
(45) Date of publication and mention of the grant of the patent: **10.06.2026**
(21) Application number: 21218206.7
(22) Date of filing: 29.12.2021
(51) Int. Cl.: A01G 3/053

(54) **CUTTER APPARATUS, CUTTING TOOL, AND METHOD FOR MANUFACTURING CUTTER APPARATUS**
SCHNEIDVORRICHTUNG, SCHNEIDWERKZEUG UND VERFAHREN ZUR HERSTELLUNG EINER SCHNEIDVORRICHTUNG
APPAREIL DE COUPE, OUTIL DE COUPE ET PROCÉDÉ DE FABRICATION D'UN APPAREIL DE COUPE

(30) Priority: 11.01.2021 CN 202110030451
(43) Date of publication of application: 13.07.2022
(73) Proprietor: Techtronic Cordless GP, Anderson, SC 29621 (US)
(72) Inventor: WANG, Zheng Jun, Dongguan City (CN); XIE, You Lian, Dongguan City (CN); WANG, Yan Jia, Dongguan City (CN)
(74) Representative: Zimmermann & Partner Patentanwälte mbB

(56) References cited:
- EP-A1- 1 066 913
- FR-A1- 2 698 308
- US-A- 5 531 027

## Description

### Technical Field

The present invention relates to the field of cutting tools, in particular to a cutter apparatus, a cutting tool, and a method for manufacturing a cutter apparatus.

### Background Art

In some scenarios, there is a need to trim objects such as tree branches, leaves and bushes. A cutting tool with a blade will often be used to do this. In the process of operation of the cutting tool, the blade will suffer wear due to interaction with the object needing to be processed, while the cutting tool itself also needs to consume power.

The US 5, 531, 027 A discloses a hedge trimmer having a hedge trimmer housing, with a motor and a drive assembly, wherein a first blade is a stationary cutting blade having a plurality of teeth and a second blade is a movable cutting blade having a plurality of flat-edged cutting teeth, wherein the first and second blades are fixed by a fixing plate attached to the two blates by a plurality of rivets. The FR 2 698 308 A1 describes anti-soiling cutting blade made of corrosion-resistant steel for use with vegetation cutters, wherein the blades have a great hardness and a very fine surface. The EP 1 066 913 A1 refers to a method of manufacturing a blade for a cutting tool comprising laser treatment of a base material along a curve determined by the later cutting edge and molding the cutting edge within the laser treated region.

Many problems are associated with existing cutting tools of this type, such as the blade being susceptible to wear and failure, high power consumption, a short service life and a high cost. All of these are undesirable.

### Summary of the Invention

In response to one or more technical deficiencies of the prior art, the present invention provides a cutter apparatus, a cutting tool, and a method for manufacturing a cutter apparatus as defined by the appendant claims.

According to the present invention, a cutter apparatus is achieved with claim 1, comprising a first blade and a second blade, the first blade and second blade being configured to reciprocate relative to one another in an axial direction in an operable fashion, the first blade having a first hardness, and the second blade having a second hardness different to the first hardness, characterized in that the first hardness is in the range of HRC 45 - HRC 50, and the second hardness is in the range of HRC 40 - HRC 45, and the ratio of the first hardness to the second hardness is greater than 1.14 and nor more than 1.25.

Alternatively or additionally, the first hardness is not less than HRC 48 and not more than HRC 50, and the second hardness is not less than HRC 40 and not more than HRC 42.

Alternatively or additionally, the first blade has a first surface roughness, and the second blade has a second surface roughness different from the first surface roughness.

Alternatively or additionally, the first blade is made by thermal cutting, and the second blade is made by shearing-type processing; for example, the thermal cutting is laser machining, and the shearing-type processing is stamping.

Alternatively or additionally, the first blade and second blade comprise an iron-carbon alloy.

Alternatively or additionally, the first blade comprises a sharp tooth having a cutting edge, the second blade comprises a blunt tooth having no cutting edge, and the sharp tooth and the blunt tooth cooperate to perform a cutting operation. Optionally, the first blade and the second blade have different configurations or markings, in order to distinguish between the first blade and the second blade.

According to another aspect of the present invention, a cutting tool is provided according to claim 8. The cutting tool comprises a housing, a power supply chamber, a motive power apparatus and a cutter apparatus. The power supply chamber is configured to be attached to the housing or as part of the housing, and configured to accommodate a power supply apparatus; the motive power apparatus is arranged in the housing; and at least a part of the cutter apparatus is arranged in the housing and configured to receive motive power supplied by the motive power apparatus. The cutting tool is for example a hedge trimmer. Optionally, the first blade is a moving blade, and the second blade is a static blade.

According to another aspect of the present invention, a method for manufacturing a cutter apparatus is provided according to claim 10. The method comprises providing a first blade, the first blade having a first hardness; and providing a second blade, the second blade having a second hardness that is different from the first hardness. The first blade and the second blade are configured to reciprocate relative to one another in an axial direction in an operable fashion. The first hardness is in the range of HRC 45 - HRC 50, the second hardness is in the range of HRC 40 - HRC 45, and the ratio of the first hardness to the second hardness is greater than 1.14 and not more than 1.25.

Alternatively or additionally, the step of providing the first blade comprises: providing a first base material; and subjecting the first base material to thermal cutting to make the first blade; for example, the first blade material may be subjected to laser cutting to make the first blade. The step of providing the second blade comprises: providing a second base material; and subjecting the second base material to shearing-type processing to make the second blade; for example, the second base material may be subjected to stamping to make the second blade.

Alternatively or additionally, the method further comprises mating the first blade with the second blade, so that the first blade and second blade reciprocate relative to one another in an axial direction in an operable fashion.

The cutter apparatus, cutting tool, and manufacturing method for a cutter apparatus according to one or more embodiments of the present invention have several technical advantages. For example, the cutter apparatus according to one or more embodiments of the present invention has better wear resistance and usefulness and a lower cost. As another example, the cutting tool according to one or more embodiments of the present invention has reduced power consumption and a longer service life.

More embodiments and beneficial technical effects of the present invention will be described in detail below.

### Brief Description of the Drawings

Fig. 1A shows a schematic drawing of the cutter apparatus according to some embodiments of the present invention.
Fig. 1B shows a schematic exploded view of the cutter apparatus in Fig. 1A.
Fig. 2A shows a schematic drawing of the cutting tool in some embodiments of the present invention.
Fig. 2B shows a schematic drawing of the cutting tool in Fig. 2A, with part of the housing removed.
Fig. 3 shows a flow chart of a method for manufacturing a cutter apparatus according to some embodiments of the present invention.
Fig. 4 shows a schematic drawing of the laser cutting system according to some embodiments of the present invention.

### Detailed Description of Embodiments

In order to facilitate the understanding of the present invention, a number of exemplary embodiments will be described below with reference to related drawings.

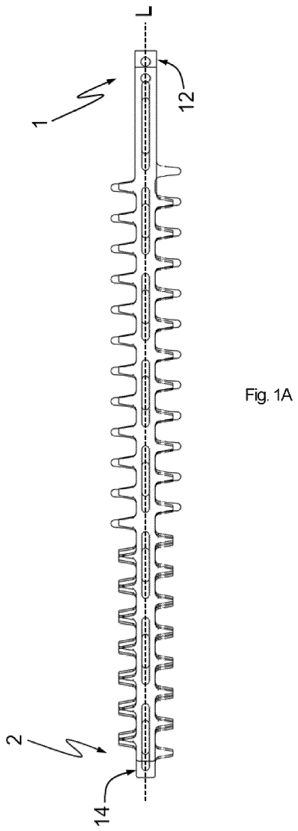

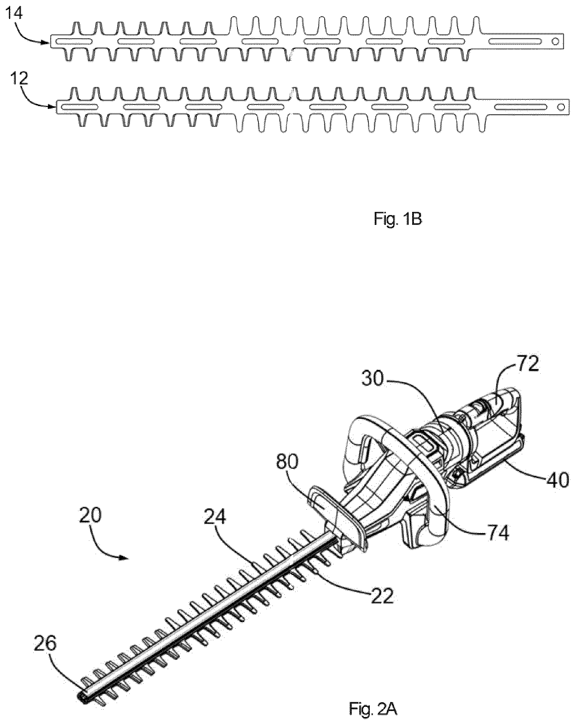

According to one aspect of the present invention, Figs. 1A and 1B show schematic drawings of the cutter apparatus according to some embodiments of the present invention. The cutter apparatus may for example be used in one or more cutting tool, e.g. as an operating apparatus (e.g. a cutting component) of the cutting tool, for performing operations such as trimming, cutting and lopping on operation targets such as tree branches, leaves and bushes.

As illustrated in the figures, the cutter apparatus comprises a first end 1 and a second end 2. The first end 1 is for example a mounting end or a driving end, which may be configured to be coupled to or mounted on a part of the cutting tool. The second end 2 is for example a free end, which may be arranged remote from a housing of the cutting tool.

In some embodiments, the cutting tool according to the present invention is a reciprocating cutting tool, e.g. a hedge trimmer. A blade in the cutter apparatus performs a reciprocating cutting motion.

The cutter apparatus comprises a first blade 12 and a second blade 14. The first blade 12 and second blade 14 are configured to move relative to one another in an operable fashion, e.g. reciprocate relative to one another in the direction of an axis L. In Fig. 1A, as an example, the first blade 12 is a lower blade, and the second blade 14 is an upper blade, with the upper blade being arranged on top of the lower blade, and the upper and lower blades being coupled or mated to each other via a suitable coupling mechanism, and being capable of relative movement when operated, in order to perform operations.

The blades may also be configured in other ways; for example, in some embodiments, the first blade is configured as the upper blade, and the second blade is configured as the lower blade. The words "upper" and "lower" are merely intended to facilitate description, being used to express the relative orientations of the blades. For example, when the cutter apparatus is placed in a specific orientation, the upper blade may also be a left blade located at the left side of the lower blade, while the lower blade may also be a right blade located at the right side of the upper blade.

The blades 12, 14 may be made of a suitable material, e.g. a suitable material having wear-resistant and impact-resistant characteristics. The blades 12, 14 may for example comprise an iron-carbon alloy. In addition, depending on actual needs, the geometric configurations (e.g. length, width, geometric shape and size of teeth, distance between adjacent teeth) of the blades 12, 14 may be exactly the same, partly the same, completely different or partly different.

The first blade 12 has a first hardness, and the second blade 14 has a second hardness, the first hardness and second hardness being different. According to the invention, the first hardness is in the range of HRC 45 - HRC 50. The first hardness is for example in the range of HRC 45 - HRC 47. The first hardness is for example in the range of HRC 46 - HRC 48. The first hardness is for example in the range of HRC 47 - HRC 49. The first hardness is for example HRC 45, HRC 46, HRC 47, HRC 48, HRC 49 or HRC 50.

According to the invention, the second hardness is in the range of HRC 40 - HRC 45. The second hardness is for example in the range of HRC 40 - HRC 44. The second hardness is for example in the range of HRC 41 - HRC 43. The second hardness is for example in the range of HRC 42 - HRC 45. The second hardness is for example HRC 40, HRC 41, HRC 42, HRC 43, HRC 44 or HRC 45.

In some embodiments, the ratio of the first hardness to the second hardness is greater than 1 and not more than 1.25. The ratio of the first hardness to the second hardness is for example greater than 1 and not more than 1.2. The ratio of the first hardness to the second hardness is for example greater than 1.05 and not more than 1.15. The ratio of the first hardness to the second hardness is for example greater than 1.1 and not more than 1.25. The ratio of the first hardness to the second hardness is for example 1.05, 1.1, 1.15, 1.2 or 1.25.

In some embodiments, it is found that when the first hardness is not less than HRC 48 and not more than HRC 50 and the second hardness is not less than HRC 40 and not more than HRC 42, the cutter apparatus formed by fitting together the first blade having such a first hardness and the second blade having such a second hardness has significantly better performance, e.g. a significantly improved cutting effect and a significantly increased life. This might be due to better synergy between the two.

According to the invention, it is found that when the ratio of the first hardness to the second hardness is greater than 1.14 and not more than 1.25, the cutter apparatus formed by fitting together the first blade and second blade having such a hardness ratio has significantly better performance, e.g. a significantly improved cutting effect and a significantly increased life. This might be due to better synergy between the two.

In some embodiments, the first blade 12 comprises multiple teeth, at least a portion of the multiple teeth comprising cutting edges; these are referred to as sharp teeth. The second blade 14 comprises multiple teeth, at least a portion of the multiple teeth not comprising cutting edges; these are referred to as blunt teeth. In some embodiments, the sharp teeth of the first blade 12 and the blunt teeth of the second blade 14 cooperate to perform the cutting operation. Such a configuration is favourable for the cutting effect in some scenarios.

In some embodiments, the first blade 12 and second blade 14 have different appearances or configurations, or they may have different markings, to make it easier for the user to distinguish between the first blade 12 and the second blade 14. The configuration may for example include the geometric shape and size, etc. of the blade. Markings may include dot markings, line markings, and other suitable graphic markings or non-graphic markings. The marking may for example be an engraving. The marking may be made by a suitable method (e.g. laser marking).

In the prior art, the characteristics of common blades (e.g. hardness, roughness, etc.) are substantially the same. The inventors of the present invention have realized that the designs in the prior art have many disadvantages. For example, if both blades are of lower hardness, the cutting effect is often poor, e.g. the cut face of a tree branch will be rougher, and this is generally undesirable. In addition, the cutting edges of the blades easily fold over or curl, and this is especially serious when faced with objects of greater hardness (e.g. thicker tree branches). If both blades are of higher hardness, the cutting edges of the blades easily suffer corner collapse when cutting objects of greater hardness. This is because the tip or cutting edge is generally the most fragile cutting part of the blade, and during operation must bear most of the impact force, which will strike the cutting edge until it deforms or even breaks up.

Whether edge-folding or corner collapse or even fragmentation occurs, all of these will significantly lower the blade performance, causing the blade to lose at least some of its cutting ability. In the course of continued operation, the damaged part of the cutting edge region might expand rapidly, leading to greater damage, or even causing the entire blade to fail completely. Furthermore, due to the loss of some of the cutting ability, more power needs to be consumed when cutting the same object. Thus, not only are the performance and lifespan of the blade itself reduced, but the performance and lifespan of the entire cutting tool will also be reduced.

By configuring the blades according to embodiments of the present invention to have different hardnesses, one or more of these technical problems in the prior art can be solved or significantly mitigated. For example, since one blade has high hardness (this blade can be called the hard blade) while the other blade has low hardness (this blade can be called the soft blade), the cutting edge of the hard blade will bear a greater impact when faced with a harder or larger operation target (e.g. a thicker tree branch), thereby avoiding or mitigating curling of the cutting edges of the soft blade. At the same time, compared with two blades of the same hardness, the soft blade can also cushion the impact sustained by the hard blade, thereby avoiding or mitigating corner collapse on the cutting edges of the hard blade. Thus, the cutter configuration according to the above-described embodiments of the present invention has better wear resistance, so can reduce damage to the blades during operation; thus, the cutter configuration has an extended service life, and it is cost-effective. In addition, such a hardness configuration also provides a mechanism for protecting the blades, and it is thereby possible to obtain a better operation effect on an operation target, thus increasing the usefulness of the cutter apparatus.

In addition, in the prior art, the general mentality is that using the same configuration for both blades (which will therefore also have the same hardness) is the simplest approach, otherwise it will be necessary to add extra technical processes and costs. Moreover, from a mathematical perspective, if both blades have the same configuration, they will be symmetric, and symmetry generally implies optimized performance.

Due to these ideological and technical preconceptions, people often use tools with blades of the same, lower hardness in the prior art in order to reduce costs, but such tools are not suitable for processing operation targets of higher hardness. Thus, in scenarios where operation targets of high hardness need to be processed, people use tools with blades of the same, higher hardness, but this often means significantly increased costs, and is also associated with the phenomenon of corner collapse as mentioned above. This also means that when processing targets of high hardness, the specific tool will need to be replaced, which is inconvenient.

In this regard, the inventors of the present invention have realized that by merely configuring the blades to have different hardnesses, costs can be significantly reduced while increasing applicability. Furthermore, as stated above, completely unexpectedly, the inventors have found that such a configuration also produces an unexpected effect in terms of operation. The two types of blade, soft and hard, cooperate with each other, one blade providing assistance and protection for the other blade, thus improving the overall apparatus performance and lifespan.

In some embodiments, the first blade 12 is made by thermal cutting, while the second blade 14 is made by shearing-type processing. For example, the first blade 12 is made by laser machining, while the second blade 14 is made by stamping. For example, the first blade 12 may have higher hardness, while the second blade 14 may have better toughness. Due to the fact that the second blade 14 has better toughness, in the course of operation, it can further provide a cushioning force for the first blade 12, thereby protecting the first blade 12.

In some embodiments, the first blade 12 has a first surface roughness, and the second blade 14 has a second surface roughness, the first surface roughness being different from the second surface roughness. For example, compared with the second blade 14, the surface and cutting edge of the first blade 12 may be smoother, and have lower roughness. For specific operation targets, surface roughness within a specific range might be advantageous. Because the surface roughnesses of the two blades are different, the scope of application or scenarios of the cutter apparatus can be further increased.

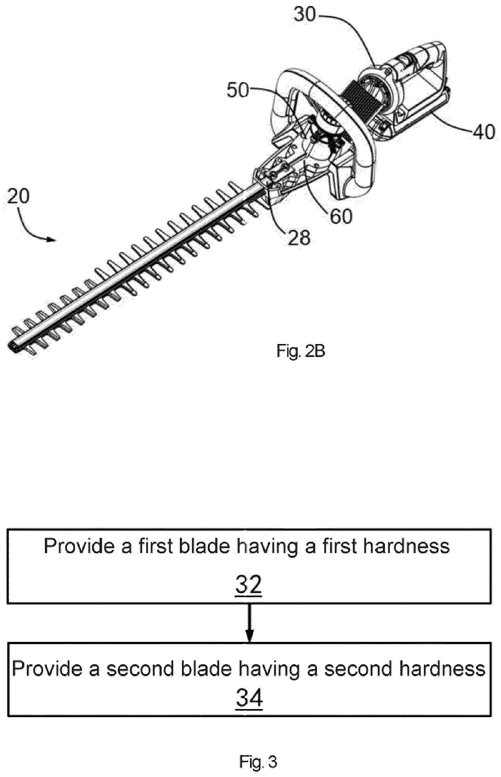

According to another aspect of the present invention, Figs. 2A and 2B show schematic drawings of the cutting tool in some embodiments of the present invention. For clarity, part of the housing of the cutting tool has been removed in Fig. 2B. In Figs. 2A and 2B, the cutting tool is illustrated as a hedge trimmer. Other suitable types of cutting tool are also possible.

As illustrated in the figures, the cutting tool comprises a housing 30, a power supply chamber 40, a motive power apparatus 50, and a cutter apparatus 20.

The housing 30 is made of a suitable material, e.g. plastic, alloy, or a combination thereof. The housing 30 may be formed as one piece or as an assembly of multiple individual pieces. A first handle 72, a second handle 74 and a protection mechanism 80 (e.g. a protective cover plate) may also be provided on the housing 30.

The power supply chamber 40 is configured to be attached to the housing 30, or as part of the housing 30. The power supply chamber 40 is configured to accommodate a power supply apparatus, which for example is a battery pack or a set of batteries, etc.

The motive power apparatus 50 is arranged in the housing 30. The motive power apparatus 50 for example comprises a motor. The motive power apparatus 50 receives electric power of the power supply apparatus, and generates a motive power output to drive the cutter apparatus 20.

The cutter apparatus 20 is configured to perform an operation on an operation target (e.g. a tree branch, etc.). The cutter apparatus 20 may be constructed in a suitable manner. The cutter apparatus 20 is for example the cutter apparatus illustrated in Figs. 1A and 1B. A part 28 of the cutter apparatus 20 is arranged in the housing 30 (Fig. 2B), and is coupled to the motive power apparatus 50 via a transmission mechanism 60, in order to receive the motive power output of the motive power apparatus 50.

As an example, the cutter apparatus 20 comprises a blade 22 and a blade 24, the hardnesses of the blade 22 and the blade 24 being different. The blade 22 may for example be the first blade 12 shown in Fig. 1A, while the blade 24 may for example be the second blade 14 shown in Fig. 1A. The blade 22 and blade 24 are coupled or fitted together via a coupling mechanism 26. The blade 22 and blade 24 are able to reciprocate relative to one another in the direction of an axis, thereby performing an operation on an operation target.

In some embodiments, the blade 22 is a moving blade, while the blade 24 is a static blade. Thus, in the course of cutting, the static blade remains stationary, while the moving blade moves relative to the static blade, thus giving rise to relative movement of the blades. In general, it is advantageous for the static blade, which has better toughness, to be made by shearing-type processing. In general, it is advantageous for the moving blade, which has higher hardness, to be made by thermal cutting.

The cutting tool according to one or more embodiments of the present invention has several advantages. For example, because the blades of the cutter apparatus used have different hardnesses, the blades are not susceptible to wear and performance is unlikely to fall, so the power consumption of the cutting tool can be reduced. For example, compared with a cutting tool in which both blades have the same hardness, the motor current of the cutting tool according to one or more embodiments of the present invention can be reduced by 10% - 20%, and the current is more stable. This is favourable for the lifespan of the motor and the cutting tool. The cutting tool according to one or more embodiments of the present invention has better usefulness, lower power consumption, and a longer service life.

According to another aspect of the present invention, Fig. 3 shows a flow chart of a method for manufacturing a cutter apparatus according to some embodiments of the present invention. The method may for example be used to manufacture the cutter apparatus illustrated in Figs. 1A and 1B.

In box 32, a first blade is provided, the first blade having a first hardness. The first blade is for example the first blade 12 illustrated in Fig. 1A, or the blade 22 illustrated in Fig. 2A. In some embodiments, a first base material is first provided, for example comprising pre-hardened steel, and the first base material is then subjected to thermal cutting to produce the first blade. Thermal cutting is a method in which concentrated thermal energy is utilized to achieve melting or burning and separation of a material.

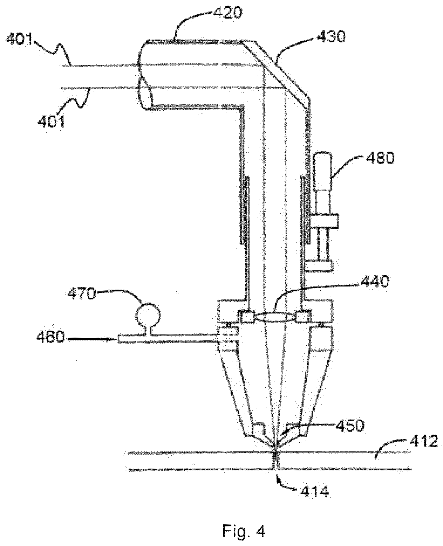

In some embodiments, a method of laser cutting is used to machine the first blade. Laser cutting may for example be performed by means of the laser cutting system illustrated in Fig. 4. A laser light beam 401 enters a tubular cavity 420, shines onto a mirror surface 430, and is reflected by the mirror surface 430 to a lens 440. The lens 440 converges the laser light beam 401, and shines it onto a blade 412 through a nozzle 450. In addition, a cutting gas 460 enters the system through another inlet; the flow rate of the cutting gas 460 can be monitored by means of a pressure gauge 470. The position of the tubular cavity 420 can be adjusted by means of a height adjustment mechanism 480.

The laser light beam 401 may be produced by a suitable laser light source (e.g. a carbon dioxide laser, etc.). The laser light beam 401 irradiates 412, causing the material at the irradiated position to rapidly melt, vaporize, burn away or reach its combustion point, while molten material is blown away by means of a high-speed gas stream, thereby making a cut 414 in the blade 412. In addition, the blade 412 may be subjected to quenching. A blade that undergoes this laser cutting has higher hardness.

Since laser cutting has good cutting quality, high efficiency and a fast speed, this is also favourable for blade processing. Furthermore, as a contactless processing method, laser cutting will not have any undesirable mechanical effects on the blade.

In some embodiments, after undergoing thermal cutting, the blade may be subjected to further processing, e.g. one or more of sharpening, plane processing, deburring, levelling, cleaning/rust prevention, etc.

In box 34, a second blade is provided, the second blade having a second hardness that is different from the first hardness. The second blade is for example the second blade 14 illustrated in Fig. 1A, or the blade 24 illustrated in Fig. 2A. In some embodiments, a second base material is first provided; the second base material may be the same as the first base material or different therefrom. The second base material comprises for example pre-hardened steel. The second base material then undergoes shearing-type processing to make the second blade. For example, the second blade may be made by stamping the second base material. For example, the second base material may be subjected to processes such as stamping, CNC sharpening and heat treatment in order to make the second blade.

In some embodiments, after undergoing shearing-type processing, the blade may be subjected to further processing, e.g. one or more of sharpening, plane processing, deburring, levelling, cleaning/rust prevention, etc.

In some embodiments, the first blade and second blade are further mated, e.g. coupled and fitted together by means of a coupling mechanism, so that the first blade and second blade reciprocate relative to one another in an axial direction in an operable fashion.

Those skilled in the art should understand that the embodiments described above are merely intended to illustrate the present invention, and by no means limit it. Those skilled in the art should also understand that the above embodiments attempt to illustrate one or more ideas of the present invention from different aspects, and they are not isolated; instead, those skilled in the art may combine different embodiments in an appropriate way based on the above examples to obtain other examples of the technical solution. The invention is achieved with the appended claims.

Unless otherwise defined, the technical and scientific terms used herein have the same meanings as commonly understood by those ordinarily skilled in the art of the present invention. The implementations of the present invention are illustrated in nonlimiting embodiments. Various variations that can be conceived by those skilled in the art on the basis of the embodiments disclosed above shall fall within the scope of the present invention.

## Claims

1. Cutter apparatus (20) comprising a first blade (12) and a second blade (14), the first blade (12) and second blade (14) being configured to reciprocate relative to one another in an axial direction in an operable fashion, the first blade (12) having a first hardness, and the second blade (14) having a second hardness, wherein the second hardness is different from the first hardness,
**characterized in that** the first hardness is in the range of HRC 45 - HRC 50, the second hardness is in the range of HRC 40 - HRC 45, and the ratio of the first hardness to the second hardness is greater than 1.14 and not more than 1.25.

2. Cutter apparatus (20) according to Claim 1, **characterized in that** the first hardness is not less than HRC 48 and not more than HRC 50, and the second hardness is not less than HRC 40 and not more than HRC 42.

3. Cutter apparatus (20) according to any one of the preceding claims, **characterized in that** the first blade (12) has a first surface roughness, and the second blade (14) has a second surface roughness different from the first surface roughness.

4. Cutter apparatus (20) according to any one of the preceding claims, **characterized in that** the first blade (12) is made by thermal cutting, and the second blade (14) is made by shearing-type processing; preferably, the thermal cutting is laser machining, and the shearing-type processing is stamping.

5. Cutter apparatus (20) according to any one of the preceding claims, **characterized in that** the first blade (12) and second blade (14) comprise an iron-carbon alloy.

6. Cutter apparatus (20) according to any one of the preceding claims, **characterized in that** the first blade (12) comprises a sharp tooth having a cutting edge, the second blade (14) comprises a blunt tooth having no cutting edge, and the sharp tooth and the blunt tooth cooperate to perform a cutting operation.

7. Cutter apparatus (20) according to any one of the preceding claims, **characterized in that** the first blade (12) and the second blade (14) have different configurations or markings, in order to distinguish between the first blade (12) and the second blade (14).

8. Cutting tool, **characterized by** comprising:
a housing (30);
a power supply chamber (40), configured to be attached to the housing (30) or as part of the housing (30), and configured to accommodate a power supply apparatus;
a motive power apparatus (50), arranged in the housing (30); and
a cutter apparatus (20) according to any one of Claims 1 - 7, at least a part of the cutter apparatus (20) being arranged in the housing (30) and configured to receive motive power supplied by the motive power apparatus (50).

9. Cutting tool according to Claim 8, **characterized in that** the cutting tool is a hedge trimmer.

10. Method for manufacturing a cutter apparatus (20), comprising:
providing a first blade (12), the first blade (12) having a first hardness; and
providing a second blade (14), the second blade (14) having a second hardness, wherein the second hardness is different from the first hardness;
wherein the first blade and the second blade being configured to reciprocate relative to one another in an axial direction in an operable fashion,
**characterized in that** the first hardness is in the range of HRC 45 - HRC 50, the second hardness is in the range of HRC 40 - HRC 45, and the ratio of the first hardness to the second hardness is greater than 1.14 and not more than 1.25.

11. Method according to Claim 10, **characterized in that** the step of providing the first blade (12) comprises:
providing a first base material; and
subjecting the first base material to thermal cutting to make the first blade (12), preferably subjecting the first base material to laser cutting to make the first blade (12).

12. Method according to Claim 10 or 11, **characterized in that** the step of providing the second blade (14) comprises:
providing a second base material; and
subjecting the second base material to shearing-type processing to make the second blade (14), preferably subjecting the second base material to stamping to make the second blade (14).

13. Method according to any one of Claims 10 - 12, **characterized by** further comprising mating the first blade (12) with the second blade (14), so that the first blade (12) and second blade (14) reciprocate relative to one another in an axial direction in an operable fashion.

## Patentansprüche

1. Schneidvorrichtung (20) mit einer ersten Klinge (12) und einer zweiten Klinge (14), wobei die erste Klinge (12) und die zweite Klinge (14) so ausgebildet sind, dass sie sich in axialer Richtung funktionsmäßig relativ zueinander hin- und herbewegen können,
wobei die erste Klinge (12) eine erste Härte und die zweite Klinge (14) eine zweite Härte aufweist, wobei sich die zweite Härte von der ersten Härte unterscheidet,
**dadurch gekennzeichnet, dass** die erste Härte im Bereich von HRC 45 bis HRC 50 liegt, die zweite Härte im Bereich von HRC 40 bis HRC 45 liegt und das Verhältnis der ersten Härte zur zweiten Härte größer als 1,14 ist und nicht mehr als 1,25 beträgt.

2. Schneidvorrichtung (20) nach Anspruch 1,
**dadurch gekennzeichnet, dass** die erste Härte nicht weniger als HRC 48 und nicht mehr als HRC 50 beträgt und die zweite Härte nicht weniger als HRC 40 und nicht mehr als HRC 42 beträgt.

3. Schneidvorrichtung (20) nach einem der vorstehenden Ansprüche,
**dadurch gekennzeichnet, dass** die erste Klinge (12) eine erste Oberflächenrauheit und die zweite Klinge (14) eine zweite Oberflächenrauheit aufweist, die sich von der ersten Oberflächenrauheit unterscheidet.

4. Schneidvorrichtung (20) nach einem der vorstehenden Ansprüche,
**dadurch gekennzeichnet, dass** die erste Klinge (12) durch thermisches Schneiden hergestellt ist und die zweite Klinge (14) durch Scherbearbeitung hergestellt ist; wobei vorzugsweise das thermische Schneiden eine Laserbearbeitung und die Scherbearbeitung ein Stanzen ist.

5. Schneidvorrichtung (20) nach einem der vorstehenden Ansprüche,
**dadurch gekennzeichnet, dass** die erste Klinge (12) und die zweite Klinge (14) eine Eisen-Kohlenstoff-Legierung enthalten.

6. Schneidvorrichtung (20) nach einem der vorstehenden Ansprüche,
**dadurch gekennzeichnet, dass** die erste Klinge (12) einen scharfen Zahn mit einer Schneidkante umfasst, die zweite Klinge (14) einen stumpfen Zahn ohne Schneidkante umfasst und der scharfe Zahn und der stumpfe Zahn zusammenwirken, um einen Schneidvorgang auszuführen.

7. Schneidvorrichtung (20) nach einem der vorstehenden Ansprüche,
**dadurch gekennzeichnet, dass** die erste Klinge (12) und die zweite Klinge (14) unterschiedliche Konfigurationen oder Markierungen aufweisen, um zwischen der ersten Klinge (12) und der zweiten Klinge (14) zu unterscheiden.

8. Schneidwerkzeug, **dadurch gekennzeichnet, dass** es umfasst:
ein Gehäuse (30);
eine Stromversorgungskammer (40), die dazu ausgebildet ist, an dem Gehäuse (30) angebracht zu werden, oder Teil des Gehäuses (30) ist, und die dazu ausgebildet ist, eine Stromversorgungsvorrichtung aufzunehmen;
eine Antriebsvorrichtung (50), die in dem Gehäuse (30) angeordnet ist; und
eine Schneidvorrichtung (20) nach einem der Ansprüche 1 bis 7, wobei zumindest ein Teil der Schneidvorrichtung (20) in dem Gehäuse (30) angeordnet und dazu ausgebildet ist, von der Antriebsvorrichtung (50) gelieferte Antriebskraft aufzunehmen.

9. Schneidwerkzeug nach Anspruch 8,
**dadurch gekennzeichnet, dass** das Schneidwerkzeug eine Heckenschere ist.

10. Verfahren zur Herstellung einer Schneidvorrichtung (20), umfassend:
Bereitstellen einer ersten Klinge (12), wobei die erste Klinge (12) eine erste Härte aufweist; und
Bereitstellen einer zweiten Klinge (14), wobei die zweite Klinge (14) eine zweite Härte aufweist, wobei sich die zweite Härte von der ersten Härte unterscheidet;
wobei die erste Klinge und die zweite Klinge so ausgebildet sind, dass sie sich in axialer Richtung funktionsmäßig relativ zueinander hin- und herbewegen können,
**dadurch gekennzeichnet, dass** die erste Härte im Bereich von HRC 45 bis HRC 50 liegt, die zweite Härte im Bereich von HRC 40 bis HRC 45 liegt und das Verhältnis der ersten Härte zur zweiten Härte größer als 1,14 ist und nicht mehr als 1,25 beträgt.

11. Verfahren nach Anspruch 10,
**dadurch gekennzeichnet, dass** der Schritt des Bereitstellens der ersten Klinge (12) umfasst:
Bereitstellen eines ersten Grundmaterials; und
Unterziehen des ersten Grundmaterials einem thermischen Schneidvorgang, um die erste Klinge (12) herzustellen, vorzugsweise Unterziehen des ersten Grundmaterials einem Laserschneiden, um die erste Klinge (12) herzustellen.

12. Verfahren nach Anspruch 10 oder 11,
**dadurch gekennzeichnet, dass** der Schritt des Bereitstellens der zweiten Klinge (14) umfasst:
Bereitstellen eines zweiten Grundmaterials; und
Unterziehen des zweiten Grundmaterials einer Scherbearbeitung, um die zweite Klinge (14) herzustellen, vorzugsweise Unterziehen des zweiten Grundmaterials einem Stanzvorgang, um die zweite Klinge (14) herzustellen.

13. Verfahren nach einem der Ansprüche 10 bis 12,
**dadurch gekennzeichnet, dass** es ferner das Zusammenfügen der ersten Klinge (12) mit der zweiten Klinge (14) umfasst, so dass sich die erste Klinge (12) und die zweite Klinge (14) in axialer Richtung funktionsmäßig relativ zueinander hin- und herbewegen können.

## Revendications

1. Appareil de coupe (20) comprenant une première lame (12) et une deuxième lame (14), la première lame (12) et la deuxième lame (14) étant conçues pour effectuer un mouvement en va-et-vient l'une par rapport à l'autre dans une direction axiale de manière fonctionnelle, la première lame (12) présentant une première dureté, et la deuxième lame (14) présentant une deuxième dureté, la deuxième dureté étant différente de la première dureté,
**caractérisé en ce que** la première dureté est comprise dans la plage de HRC 45 à HRC 50, la deuxième dureté est comprise dans la plage de HRC 40 à HRC 45, et le rapport de la première dureté sur la deuxième dureté est supérieur à 1,14 et ne dépasse pas 1,25.

2. Appareil de coupe (20) selon la revendication 1,
**caractérisé en ce que** la première dureté n'est pas inférieure à HRC 48 et n'est pas supérieure à HRC 50, et la deuxième dureté n'est pas inférieure à HRC 40 et n'est pas supérieure à HRC 42.

3. Appareil de coupe (20) selon l'une des revendications précédentes,
**caractérisé en ce que** la première lame (12) présente une première rugosité de surface, et la deuxième lame (14) présente une deuxième rugosité de surface différente de la première rugosité de surface.

4. Appareil de coupe (20) selon l'une des revendications précédentes,
**caractérisé en ce que** la première lame (12) est fabriquée par découpe thermique, et la deuxième lame (14) est fabriquée par un procédé de type cisaillement ; de préférence, la découpe thermique est un usinage au laser, et le procédé de type cisaillement est un estampage.

5. Appareil de coupe (20) selon l'une des revendications précédentes,
**caractérisé en ce que** la première lame (12) et la deuxième lame (14) contiennent un alliage fer-carbone.

6. Appareil de coupe (20) selon l'une des revendications précédentes,
**caractérisé en ce que** la première lame (12) comprend une dent acérée présentant un tranchant, la deuxième lame (14) comprend une dent émoussée ne présentant pas de tranchant, et la dent acérée et la dent émoussée coopèrent pour effectuer une opération de coupe.

7. Appareil de coupe (20) selon l'une des revendications précédentes,
**caractérisé en ce que** la première lame (12) et la deuxième lame (14) présentent des configurations ou des marquages différents, afin de distinguer la première lame (12) de la deuxième lame (14).

8. Outil de coupe, **caractérisé en ce qu'**il comprend :
un boîtier (30) ;
une chambre d'alimentation électrique (40), conçue pour être fixée au boîtier (30) ou pour faire partie du boîtier (30), et conçue pour loger un dispositif d'alimentation électrique ;
un dispositif de puissance motrice (50), disposé dans le boîtier (30) ; et
un appareil de coupe (20) selon l'une des revendications 1 à 7, au moins une partie de l'appareil de coupe (20) étant disposée dans le boîtier (30) et conçue pour recevoir la puissance motrice fournie par le dispositif de puissance motrice (50).

9. Outil de coupe selon la revendication 8,
**caractérisé en ce que** l'outil de coupe est un taille-haie.

10. Procédé de fabrication d'un appareil de coupe (20), consistant à :
fournir une première lame (12), la première lame (12) présentant une première dureté ; et
fournir une deuxième lame (14), la deuxième lame (14) présentant une deuxième dureté, la deuxième dureté étant différente de la première dureté ;
dans lequel la première lame et la deuxième lame sont conçues pour effectuer un mouvement en va-et-vient l'une par rapport à l'autre dans une direction axiale de manière fonctionnelle,
**caractérisé en ce que** la première dureté est comprise dans la plage de HRC 45 à HRC 50, la deuxième dureté est comprise dans la plage de HRC 40 à HRC 45, et le rapport de la première dureté sur la deuxième dureté est supérieur à 1,14 et ne dépasse pas 1,25.

11. Procédé selon la revendication 10,
**caractérisé en ce que** l'étape consistant à fournir la première lame (12) consiste à :
fournir un premier matériau de base ; et
soumettre le premier matériau de base à une découpe thermique pour fabriquer la première lame (12), de préférence soumettre le premier matériau de base à une découpe au laser pour fabriquer la première lame (12).

12. Procédé selon la revendication 10 ou 11,
**caractérisé en ce que** l'étape consistant à fournir la deuxième lame (14) consiste à :
fournir un deuxième matériau de base ; et
soumettre le deuxième matériau de base à un traitement de type cisaillement pour fabriquer la deuxième lame (14), de préférence soumettre le deuxième matériau de base à un estampage pour fabriquer la deuxième lame (14).

13. Procédé selon l'une des revendications 10 à 12,
**caractérisé en ce qu'**il consiste en outre à assembler la première lame (12) avec la deuxième lame (14), de telle sorte que la première lame (12) et la deuxième lame (14) effectuent un mouvement en va-et-vient l'une par rapport à l'autre dans une direction axiale de manière fonctionnelle.
